**Europäisches Patentamt**

**European Patent Office**

**Office européen des brevets**

(19)

(11) **EP 1 726 929 A1**

(12) **EUROPEAN PATENT APPLICATION**
published in accordance with Art. 158(3) EPC

(43) Date of publication:
**29.11.2006 Bulletin 2006/48**

(51) Int Cl.:
**G01J 3/02** (2006.01)

(21) Application number: **05719832.7**

(22) Date of filing: **02.03.2005**

(86) International application number:
**PCT/JP2005/003517**

(87) International publication number:
**WO 2005/085779 (15.09.2005 Gazette 2005/37)**

(84) Designated Contracting States:
**CH DE DK LI**

(30) Priority: **03.03.2004 JP 2004058443**

(71) Applicant: **National Food Research Institute**
**Tsukuba-shi, Ibaraki 305-8642 (JP)**

(72) Inventors:
• **Kawano, Sumio**
**Ibaraki 3000816 (JP)**

• **Saranwong, Sirinnapa**
**Tsukuba-shi,**
**Ibaraki 3050032 (JP)**

(74) Representative: **Hall, Matthew Benjamin**
**Frank B. Dehn & Co.**
**St Bride's House**
**10 Salisbury Square**
**London EC4Y 8JD (GB)**

(54) **METHOD FOR STANDARDIZING SYSTEM RESPONSE OF SPECTROPHOTOMETER**

(57)     To provide a method for standardizing system response of spectrophotometer for correcting the difference between spectrophotometric system responses generated due to the difference in response characteristics of a light source, wavelength selector, and sensor. To provide a method for obtaining the difference spectrum between a master unit and a slave unit by subtracting the spectrum of a standard material measured by the master unit from the spectrum of the standard material measured by the slave unit and standardizing the response characteristic of the slave unit to the response characteristic of the master unit by subtracting the difference spectrum from the spectrum of each sample to be measured by the slave unit. In the case of an instrument which is constituted of a light source, wavelength selector, and sensor and to which a near infrared spectroscopy is applied, a shift of an absorbance value at each wavelength of the slave unit from the absorbance value of the master unit is similarly generated in each sample to be measured. Therefore, by subtracting the shift of the absorbance value at each wavelength from the spectrum of each sample, it is possible to correct the spectrum distortion generated due to the difference between system response of spectrophotometer.

Fig. 6

**Description**

Technical Field

The present invention relates to a method for standardizing system response of spectrophotometer in order to correct the spectrophotometric differences generated due to the difference in response characteristics of a light source, wavelength selector, and sensor.

Background Art

To control measurement errors and fluctuations generated by a plurality of inspection instruments used in large scale production of products, the adjustment to fit each instrument is frequently performed by using an exclusive tool. However, when many check points are present to calibrate the inspection instruments, lots of work times and predetermined man-hours are required and finally, the adjustment cost greatly influences a product price. Therefore, it is preferable to minimize the number of check points to calibrate the instrument. However, in the case of a product for which accuracy of inspection instrument is requested, artifice is necessary.

For example, Patent Document 1 describes the following expression as a relationship between the true signal on an optical disk and the measured signal produced by an optical disk inspection instrument in order to reproduce an optical disk with similar signal using multi-inspection instruments.

$$\text{True value } Y_i = \text{Gain correction coefficient } a_j \times \text{measured value } X_i + \text{offset}$$
$$\text{correction coefficient } b_i \qquad (a)$$

$X_i$: Measured value of reproduced signal
$Y_i$: True value of reproduced signal
$a_j$: Gain correction coefficient for correcting gain for each interval on disk
$b_j$: Offset correction coefficient for correcting offset for each interval on disk

The gain correction coefficient $a_j$ and the offset coefficient $b_j$ are obtained for each interval.
Patent Document 1 described a method for calibrating each optical disk inspection instrument in accordance with the calibrated values obtained by expression (a). Furthermore, Patent Document 1 described a method for inspecting an optical disk to be inspected using calibrated inspection instruments.
Patent Document 1: Japanese Patent Application Publication No. 2003-1897440

Disclosure of the Invention

However, when an object to be inspected has a frequency (wavelength) response more complex than that of an optical disk, for example, spectrum of an apple measured in a wavelength range of 700 to 1,100 nm by using a dispersive-type near infrared instrument, there is a problem that individual difference between objects to be measured is much larger than that presented in an optical disk.
Though the approximate expression (a) shown in Patent Document 1 is used, it is impossible to find a proper linear correction parameter as shown by linear correction data in Table 1.
Also when using the following approximate expression (b) using a more-complex polynomial,

$$y = k_0 + k_1 s + k_2 x^2 \qquad (b)$$

it is impossible to find a proper polynomial parameter as shown by the polynomial correction data in Table 1.
[Table 1]

| Adjustment condition | Calibration method | | | |
|---|---|---|---|---|
| | MLR | | PLS | |
| | SEP | Bias | SEP | Bias |
| No adjustment | 0.34 | -0.42 | 0.35 | -0.53 |

(continued)

| Adjustment condition | Calibration method | | | |
|---|---|---|---|---|
| | MLR | | PLS | |
| | SEP | Bias | SEP | Bias |
| 700-1,100 nm linear correction | 0.34 | -1.07 | 0.32 | -1.31 |
| 700-1,100 nm polynomial correction | 0.34 | -0.48 | 0.31 | -1.14 |
| 850-1,050 nm linear correction | 0.34 | -0.46 | 0.32 | -1.24 |
| 850-1,050 nm polynomial correction | 0.34 | 0.25 | 0.31 | -1.06 |
| (Note 1) Analysis algorithm<br>MLR (Multiple Linear Regression)<br>PLS (Partial Least Squares)<br>(Note 2)<br>SEP: Residual-error standard error (bias-corrected standard error of prediction)<br>Bias: Average of differences between actual values according to chemical analysis and estimated values according to near infrared spectroscopy | | | | |

Moreover, when transferring a calibration model (hereafter referred to as model) for performing quantitative analysis and qualitative analysis by using the near infrared spectroscopy from a unit developing the model to another similar unit, an error occurs due to the difference between spectrophotometric system responses. In the case of the quantitative analysis, there is a method referred to as bias correction method of the model as a correction method. However, this method is to correct an estimated result which requires correction for each model and labor and whose operation is complicated.

However, the correction method for qualitative analysis is not developed yet.

It is an object of the present invention to provide a method for standardizing system response of a spectrophotometer for correcting the distortion of a spectrum generated due to the difference between system responses of spectrophotometers so that a model developed by a master unit can be used by a slave unit.

To achieve the above object, a method of the present invention for standardizing the system response of a spectrophotometer provides a method for adjusting the system response of a slave unit to the system response of a master unit by calculating the difference spectrum between the slave unit and the master unit.

For example, the difference spectrum is calculated by subtracting spectrum of a standard material, for example, second derivative spectrum, measured by the slave unit with second derivative spectrum of a standard material measured by the master unit. Then, spectrum of each object measured by the slave unit is standardized by subtracting with the calculated difference spectrum. By using second derivative spectrum for calculating the difference spectrum, there is an advantage that baseline shift is eliminated.

As the spectrum of the standard material, the spectrum of a sample to be measured, second derivative spectrum, or average spectrum of these spectra mentioned before is considered. In the case of the average spectrum, the following two cases are assumed: a case of measuring a plurality of spectra by one sample to be measured and obtaining the average spectrum, and a case of measuring a plurality of spectra by a plurality of samples and obtaining the average spectrum.

An instrument to which near infrared spectroscopy is applied is constituted of light source, wavelength selector, and sensor. Wavelength characteristics, light intensity, and sensor sensitivities of spectrophotometer are delicately different for each individual instrument and the combination of these responses gives the overall characteristic of the instrument which is delicately different for each instrument. In addition, a shift of the wavelength between each spectrophotometer occurs.

However, the spectrophotometric system response is specific to each instrument when a light source, wavelength selector, and sensor are decided.

Therefore, because a shift of absorbance value of a slave unit in each wavelength from a master unit similarly occurs in each sample to be measured, it is possible to correct a spectrum distortion generated due to the difference between spectrophotometric system responses by subtracting the shift of the absorbance value in each wavelength from the spectrum of each sample, for example, second derivative spectrum.

By using the present invention, in the case of a fruit sweetness sorting machine, it is easy to transfer a mathematical model to predict sweetness developed from spectra of master unit to a plurality of other sweetness sorting units (slave units). By this invention, the difference between lines is eliminated, and the reliability of the sweetness sorting machine is improved. Moreover, there are advantages that the sweetness sorting machine is easily maintained and persons are released from the hard work at the job site for correcting the difference between lines by the conventional bias-correction technique.

Brief Description of the Drawings

Figure 1 is an illustration showing an example of an apple sweetness sorting machine;
Figures 2(a) and 2(b) are illustrations showing second derivative spectra measured by NIR instruments A and B;
Figure 3 is an illustration showing an example of applying a model developed by the NIR instrument A to the spectrum of the NIR instrument B;
Figure 4 is an illustration showing a difference spectrum obtained by subtracting the second derivative spectrum of an apple measured by the NIR instrument A from that of an apple measured by the NIR instrument B;
Figure 5 is an illustration showing an example of applying a model developed by the NIR instrument A to the standardized spectra of the NIR instrument B; and
Figure 6 is an illustration showing a difference spectrum obtained by subtracting the average spectrum of second derivative spectra measured by a master unit from the average spectrum of second derivative spectra measured by a slave unit and the average spectrum of the master unit.

Best Mode for Carrying Out the Invention

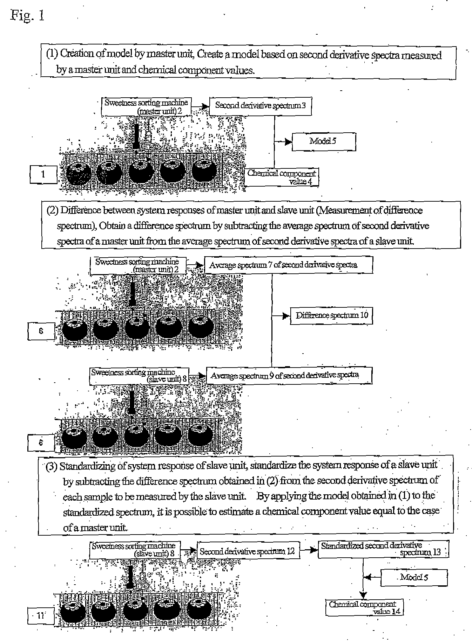

Best mode for carrying out the invention is described below. Figure 1 is one of the embodiments of the present invention, which shows an example of an apple sweetness sorting machine. In the case of the sweetness sorting machine, a tungsten lamp is used for the light source, a grating is used for the wavelength selector, and a diode array detector is used for the sensor.
At the stage for preparing a model by the master unit in Figure 1(1), a plurality of samples (apples) 1 to be measured are measured by the sensor 2 of the master unit to obtain the second derivative spectrum 3 of the master unit. Then, chemical component values 4 of the samples (apples) 1 are obtained. A model 5 is obtained by the chemometrics method such as the multiple regression based on the data for the above second derivative spectrum 3 and the above chemical component values 4.
At the stage for obtaining the difference between spectral characteristics of the master unit and slave unit in Figure 1(2), a plurality of samples (apples) 6 to be measured are measured by the sensor 2 of the master unit to obtain the average spectrum of the second derivative spectra of the master unit. Then, the same samples (apples) 6 to be measured are measured by the sensor 8 of the slave unit to obtain the average spectrum 9 of the second derivative spectra of the slave unit. Moreover, the difference spectrum 10 of second derivative values is obtained by subtracting the average spectrum 7 of the master unit from the average spectrum 9 of the slave unit.
At the stage for standardizing the spectral characteristics of the slave unit in Figure 1(3), each sample (apple) 11 to be measured is measured by the sensor 8 of the slave unit and the second derivative spectrum 12 of the slave unit is measured to obtain a standardized second derivative spectrum 13 obtained by subtracting the difference spectrum 10 from the second derivative spectrum 12. By applying the model 5 to the standardized second derivative spectrum 13, a purposed chemical component value 14 is obtained.

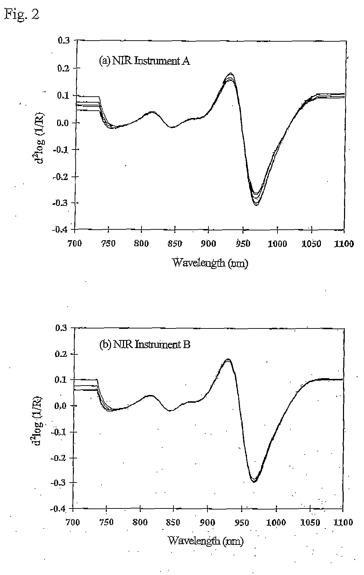

Figure 2 shows near infrared second derivative spectra of apples (variety: Fuji) measured by two dispersive-type near infrared instrument (NIR Systems, NIRS6500) (referred to as NIR instruments A and B). The near infrared instrument uses a tungsten lamp as a light source, a grating as a wavelength selector, and a silicon detector as a sensor.
The following model is developed by multiple regression based on the second derivative values measured by the NIR instrument A and sugar contents (Brix values) of 100 apples.

$$C = 16.035 - 266.386 D2A(906) + 1351.578 D2A(870)$$

$$\dots (1)$$

Where, C is a Brix value, and D2A(906) and D2A(870) are second derivative values of spectra at 906 nm and 870 nm, respectively.

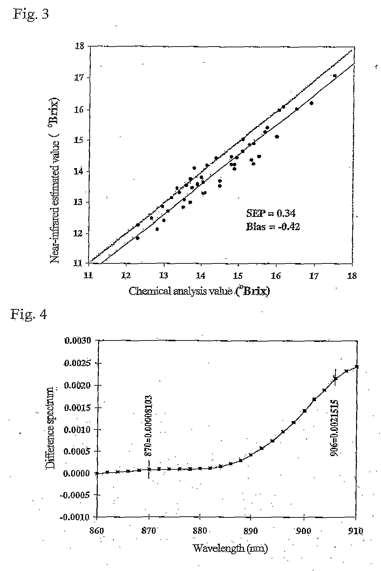

Figure 3 shows results of applying the model of the above expression (1) to a spectrum measured by the NIR instrument B. In this case, it is found that a negative bias of -0.42° Brix is generated.
Figure 4 is a difference spectrum obtained by subtracting the average spectrum of second derivative spectra of the above 100 apples measured by the NIR instrument A from the average spectrum of second derivative spectra of the same samples measured by the NIR instrument B. Figure 4 shows the wavelength range of 860 to 910 nm to be used for the model. It is found that the second derivative value of the NIR instrument B is slightly larger than that of the NIR instrument A in the wavelength region. At 906 nm, the second derivative value is large by 0.0021515 and at 870 nm, the value is large by 0.0008103. Therefore, when assuming that the second derivative values at 906 nm and 870 nm of the NIR instrument B are $D2A(906)_B$, and $D2A(870)_B$, respectively, a corrected value is obtained from the following expression.

$$D2A(906) = D2A(906)_B - 0.0021515$$

$$D2A(870) = D2A(870)_B - 0.0008103 \qquad ... (2)$$

By substituting the value of expression (2) for the model of expression (1), it is possible to apply the model developed by the NIR instrument A to the spectrum measured by the NIR instrument B.

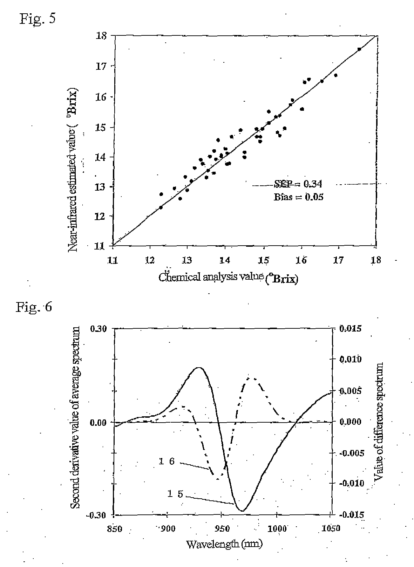

Figure 5 shows results of correcting and recalculating the data shown in Figure 3 by the above described method. A bias becomes 0.05° Brix and occurrence of errors produced due to the difference between system responses of spectrophotometers is almost cancelled. This improvement degree is clear as a result of comparing with calibration result data of linear correction and polynomial correction in Table 1.

Figure 6 shows a difference spectrum obtained by subtracting the average spectrum of second derivative spectra measured by the master unit from the average spectrum of second derivative spectra measured by the slave unit and the average spectrum of the master unit in a wavelength region of 850 to 1,050 nm together. When assuming a difference spectrum as $\Delta A(\lambda)$ and a second derivative spectrum of each sample measured by the slave unit as $S_B(\lambda)$, a standardized second derivative spectrum $S_C(\lambda)$ is shown by the following expression.

$$S_C(\lambda) = S_B(\lambda) - \Delta A(\lambda) \qquad ... (3)$$

Where, $\lambda$ is a wavelength (nm).

Industrial Applicability

It is possible to apply the method for standardizing system response of spectrophotometer by the present invention to, for example, a sweetness sorting machine which measures the spectrum of fruit moved by a belt conveyer and select the fruit in accordance with an obtained sugar content.

**Claims**

1. A method for standardizing system response of spectrophotometer comprising:

   a step of obtaining the difference spectrum between a master unit and a slave unit by subtracting the spectrum of a standard material measured by the master unit from the spectrum of the standard material measured by the slave unit serving as another spectrophotometer similar to the master unit; and
   a step of making the system response of the slave unit coincide with the system response of the master unit by subtracting the difference spectrum from the spectrum of each sample to be measured by the slave unit.

2. The method for standardizing system response of spectrophotometer according to claim 1, **characterized in that** the spectrophotometer is set to a sweetness sorting machine.

3. The method for standardizing system response of spectrophotometer according to claim 1, **characterized in that** the spectrum of the standard material is spectrum of a sample to be measured, second derivative spectrum, or average spectrum of these spectra mentioned before.

4. The method for standardizing system response of spectrophotometer according to claim 1, **characterized in that** the spectrum of the standard material is the spectrum or average spectrum of a material similar to a sample to be measured in optical density.

Fig. 1

(1) Creation of model by master unit, Create a model based on second derivative spectra measured by a master unit and chemical component values.

(2) Difference between system responses of master unit and slave unit (Measurement of difference spectrum), Obtain a difference spectrum by subtracting the average spectrum of second derivative spectra of a master unit from the average spectrum of second derivative spectra of a slave unit.

(3) Standardizing of system response of slave unit, standardize the system response of a slave unit by subtracting the difference spectrum obtained in (2) from the second derivative spectrum of each sample to be measured by the slave unit. By applying the model obtained in (1) to the standardized spectrum, it is possible to estimate a chemical component value equal to the case of a master unit.

Fig. 2

(a) NIR Instrument A

d²log (1/R)

Wavelength (nm)

(b) NIR Instrument B

d²log (1/R)

Wavelength (nm)

Fig. 3

Fig. 4

Fig. 5

Fig. 6

## INTERNATIONAL SEARCH REPORT

| | International application No. |
|---|---|
| | PCT/JP2005/003517 |

| A. CLASSIFICATION OF SUBJECT MATTER |
|---|
| Int.Cl⁷ G01J3/02 |

According to International Patent Classification (IPC) or to both national classification and IPC

| B. FIELDS SEARCHED |
|---|
| Minimum documentation searched (classification system followed by classification symbols) |
| Int.Cl⁷ G01J3/00-3/52, G01N21/00-21/61 |

Documentation searched other than minimum documentation to the extent that such documents are included in the fields searched

| Jitsuyo Shinan Koho | 1922-1996 | Toroku Jitsuyo Shinan Koho | 1994-2005 |
| Kokai Jitsuyo Shinan Koho | 1971-2005 | Jitsuyo Shinan Toroku Koho | 1996-2005 |

Electronic data base consulted during the international search (name of data base and, where practicable, search terms used)
JICST FILE(JOIS)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 11-326046 A (Nireco Corp.),<br>26 November, 1999 (26.11.99),<br>Par. Nos. [0020] to [0023], [0029] to [0031] | 1,3-4<br>2 |
| Y | JP 2003-527594 A (Autoline, Inc.),<br>16 September, 2003 (16.09.03),<br>Par. Nos. [0002] to [0013] | 2 |
| A | Sirinnapa Saranwong et al., "Prediction of ripe-stage eating quality of mango fruit from its harvest quality measured nondestructively by near infrared spectroscopy", Postharvest Biology and Technology, Vol.31, Issue 2, 18 January, 2004 (18.01.04), pages 137 to 145 | 1-4 |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>15 March, 2005 (15.03.05) | Date of mailing of the international search report<br>29 March, 2005 (29.03.05) |
|---|---|
| Name and mailing address of the ISA/<br>Japanese Patent Office | Authorized officer |
| Facsimile No. | Telephone No. |

Form PCT/ISA/210 (second sheet) (January 2004)

| INTERNATIONAL SEARCH REPORT | International application No. |
|---|---|
| Information on patent family members | PCT/JP2005/003517 |

| | | |
|---|---|---|
| JP 11-326046 A | 1999.11.26 | US 6281499 B1 |
| JP 2003-527594 A | 2003.09.16 | WO 01/69191 A<br>US 2002/0011567 A1<br>US 6847447 B2<br>CA 2402669 A1 |

Form PCT/ISA/210 (patent family annex) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 20031897440 B